# EUROPÄISCHE PATENTANMELDUNG

(11) **EP 2 660 547 A1**
(43) Veröffentlichungstag der Anmeldung: **06.11.2013**
(21) Anmeldenummer: 12166573.1
(22) Anmeldetag: 03.05.2012
(51) Int. Cl.: F27B 1/10, F27B 19/04, F27D 19/00, F27D 99/00

(54) **Metallurgische Anlage**

(71) Anmelder: Siemens Aktiengesellschaft, 80333 München (DE)
(72) Erfinder: Backes, Ralph-Herbert, 91056 Erlangen (DE); Döbbeler, Arno, 91074 Herzogenaurach (DE); Heinemann, Andreas, 96114 Hirschaid (DE); Matschullat, Thomas, 90542 Eckental (DE)

(57) **Zusammenfassung**

Die Erfindung betrifft eine metallurgische Anlage (1) zum Betreiben im Inselbetrieb, sowie ein Verfahren zur Versorgung einer metallurgischen Anlage (1) mit elektrischer Energie im Inselbetrieb. Die metallurgische Anlage (1) umfasst zwei oder mehr metallurgische Teilanlagen (21, 22, 23), ein Inselnetz (4) zur Verteilung von elektrischer Energie, mindestens ein Kraftwerk (3) mit mindestens einer Gas-Turbine zur Erzeugung elektrischer Energie in dem Inselnetz (4), und eine Steuereinrichtung (5). Die Teilanlagen (21, 22, 23) beziehen die für ihren Betrieb benötigte elektrische Energie zu mindestens 80%, insbesondere zu mindestens 90%, über das Inselnetz (4) von dem mindestens einen Kraftwerk (3). Mittels der Steuereinrichtung (5) ist eine Bereitstellung von elektrischer Energie für eine erste Teilanlage (21, 22, 23) zu Lasten mindestens einer anderen der zwei oder mehr Teilanlagen (21, 22, 23) steuerbar.

## Beschreibung

Die vorliegende Erfindung betrifft eine metallurgische Anlage sowie ein Verfahren zur Versorgung einer metallurgischen Anlage mit elektrischer Energie.

Elektrostahlwerke sind gekennzeichnet durch hohe elektrische Lastwechsel, hervorgerufen durch ein zyklisches An- und Abschalten von elektrischen Großverbrauchern, den Elektrolichtbogenöfen, kurz: Lichtbogenöfen oder EAFs (EAF = Electric Arc Furnace). Beim Betrieb eines EAF werden zeitweise Leistungen von typischerweise mehr als 100 MW aus dem elektrischen Netz entnommen. Dabei sind die Zeitskalen solcher EAF-Lastwechsel erheblich kürzer als typische Reaktionszeiten von Kraftwerksturbinen. Durch diese hohen und schnellen Lastwechsel besteht die Gefahr von unerwünschten Rückwirkungen auf das elektrische Netz, welche die Stabilität der elektrischen Versorgung und so den kontinuierlichen Betrieb des Stahlwerks gefährden.

In leistungsfähigen Verbundnetzen, wie sie in Industriestaaten existieren, sind mehrere Kraftwerke und Abnehmerzentren miteinander verbunden, so dass lokale Unterschiede zwischen Angebot und Nachfrage von Momentanleistung innerhalb des Netzes, z.B. die aus dem Betrieb von EAFs in einem Elektrostahlwerk resultierenden Lastabwürfe bzw. Laststöße, abgefangen und ausgeglichen werden können.

Im Gegensatz dazu fehlten in einem Inselnetz, d.h. in einem von einem öffentlichen oder anderen Stromnetzen abgekoppelten Netz, bisher derartige Möglichkeiten des Lastausgleichs, was zu häufigen Netzstörungen und somit einem hohen Ausfallrisiko der elektrischen Versorgung führt. Die Stabilität des elektrischen Netzes und damit die Möglichkeit einer kontinuierlichen Produktion sind aber für einen wirtschaftlichen Betrieb eines Elektrostahlwerks unabdingbar. Aus diesen Gründen wird die Versorgung eines Elektrostahlwerks ausschließlich in einem Inselbetrieb bisher vermieden oder erst durch hohe Investitionen in aufwändige Kompensationsanlagen möglich.

Dabei darf aber nicht übersehen werden, dass ein Inselnetz erhebliche Vorteile bietet, wenn ein relativ schwaches öffentliches Netz die von einem Verbraucher benötigte elektrische Energie nicht bzw. nur unzuverlässig liefern kann und/oder ein abgelegener Verbraucher lange Stromleitungen mit inakzeptablen Übertragungsverlusten erfordern würde.

Es ist daher eine Aufgabe der vorliegenden Erfindung, eine metallurgische Anlage anzugeben, die über ein Inselnetz mit elektrischer Energie versorgt werden kann, sowie ein entsprechendes Verfahren.

Die Aufgabe wird gelöst durch eine metallurgische Anlage zum Betreiben im Inselbetrieb, umfassend zwei oder mehr metallurgische Teilanlagen, ein Inselnetz zur Verteilung von elektrischer Energie, mindestens ein Kraftwerk mit mindestens einer Gas-Turbine zur Erzeugung elektrischer Energie in dem Inselnetz, und eine Steuereinrichtung, wobei die Teilanlagen die für ihren Betrieb benötigte elektrische Energie zu mindestens 80%, insbesondere zu mindestens 90%, über das Inselnetz von dem mindestens einen Kraftwerk beziehen, und wobei durch die Steuereinrichtung eine Bereitstellung von elektrischer Energie für eine erste Teilanlage zu Lasten mindestens einer anderen der zwei oder mehr Teilanlagen steuerbar ist. Die Aufgabe wird außerdem gelöst durch ein Verfahren zur Versorgung einer zwei oder mehr metallurgische Teilanlagen umfassenden metallurgischen Anlage mit elektrischer Energie im Inselbetrieb über ein Inselnetz, wobei das Verfahren folgende Schritte aufweist: Bereitstellen von elektrischer Energie in dem Inselnetz; Liefern der für den Betrieb der Teilanlagen benötigten elektrischen Energie zu mindestens 80%, insbesondere zu mindestens 90%, aus dem Inselnetz; und Steuern einer Bereitstellung von elektrischer Energie für eine erste Teilanlage zu Lasten mindestens einer anderen der zwei oder mehr Teilanlagen.

Als "Inselnetz" im Sinne der vorliegenden Erfindung gilt ein weitgehend von anderen, insbesondere öffentlichen, Stromversorgungsnetzen abgekoppeltes Stromnetz mit daran angeschlossenen Stromverbrauchern, wobei unter dem Begriff "weitgehend" verstanden wird, dass entweder ein Anteil von mindestens 80%, insbesondere von mindestens 90%, der von den Verbrauchern des Inselnetzes bezogenen elektrischen Energie durch ein oder mehrere Kraftwerke in dem Inselnetz gedeckt wird, oder dass die im "Inselnetz" zur Verfügung stehende Kurzschlussleistung an der den Kraftwerken und Stromverbrauchern übergeordneten Sammelschiene zu mindestens 80%, insbesondere zu mindestens 90%, von den Generatoren der ein oder mehreren Kraftwerke im Inselnetz bereitgestellt wird. Eine untergeordnete Anbindung des Inselnetzes an ein anderes, insbesondere öffentliches, Stromversorgungsnetz ist dabei unschädlich, sofern die über diese untergeordnete Anbindung in das Inselnetz gelieferte elektrische Energie einen Anteil von weniger als 20%, insbesondere weniger als 10%, an der gesamten im Inselnetz verbrauchten elektrischen Energie ausmacht. Unter diesen Umständen wird der Betrieb der Stromverbraucher des Inselnetzes als "Inselbetrieb" bezeichnet. Eine solche untergeordnete Anbindung kann ursprünglich, z.B. während der Errichtung der metallurgischen Anlage, primär zur Versorgung einzelner, relativ unbedeutender Stromverbraucher des Inselnetzes, z.B. Unterkünfte von Arbeitern oder einer Notstromversorgung, vorgesehen worden sein.

Ein "Inselnetz" gemäß der oben gegebenen Definition verhält sich praktisch wie ein "reines" Inselnetz, d.h. ein vollständig von anderen, insbesondere öffentlichen, Stromversorgungsnetzen abgekoppeltes Stromnetz mit daran angeschlossenen Stromverbrauchern. Dem zugrunde liegt die Erkenntnis, dass in einem Inselnetz der von einem EAF generierte Lastsprung, insbesondere im Falle eines Lichtbogenabrisses, d.h. einer plötzlicher Entlastung von einem oder mehreren Generatoren, zu einer Instabilität im Netz führen kann. Während dies einen positiven Lastsprung, d.h. eine Lasterhöhung, darstellt, ist ein negativer Lastsprung, d.h. ein sprunghafter Ausfall der Last, der zur Drehzahlerhöhung an einer Generatorwelle führt, sogar noch kritischer zu betrachten, weil weniger beeinflussbar. Dieser Fall wird um so kritischer, je näher die Lichtbogenofenleistung an die Leistung des Kraftwerkes in der Nähe dieses Ofens herankommt, und je weniger Einzelgeneratorblöcke das Kraftwerk hat (im ungünstigsten Fall nur einen Block/Generator), und je weniger Unterstützung vom öffentlichen Netz zu erwarten ist, d.h. "je mehr plötzliche Laständerung" von einem Generator getragen werden muss, der dadurch instabil werden könnte.

Dabei spielen auch die Art der Generatoren, die Kraftwerksregelung, die Netzgestaltung etc. eine wichtige Rolle, so dass die obige Definition des Begriffs "Inselnetz" im Sinne einer einfachen "Grenzziehung" von 80% bzw. 90% angegeben ist.

Die vorliegende Erfindung überwindet ein technisches Vorurteil: Bislang galt es auf dem Gebiet des Hüttenwesens als technisch aufwändig und unwirtschaftlich, ein Elektrostahlwerk ausschließlich in einem Inselbetrieb mit elektrischer Energie zu versorgen. Ein wirtschaftlicher Inselbetrieb eines Elektrostahlwerks wird erfindungsgemäß mit einer Kombination verschiedener Maßnahmen erreicht:
- Integration von zwei oder mehr metallurgischen Teilanlagen, welche unabhängig voneinander betreibbar sind, in die metallurgische Anlage. Dadurch, dass man mehr Teilanlagen als bisher im Inselnetz betreibt (je größer die Zahl der Stromabnehmer im Inselnetz, desto besser), gelingt das Abfangen und Ausgleichen von Unterschieden zwischen Angebot und Nachfrage von Momentanleistung innerhalb des Inselnetzes, insbesondere wenn zeit-unkritische Grundlast-Anlagen vorhanden sind, die zugunsten EAF abgeschaltet werden können.
- Moderne Energieerzeugung durch eine oder mehrere Gas-Turbinen. Gas-Turbinen haben relativ kurze Startzeiten und besitzen eine höhere Dynamik im Wechsel der Betriebszustände als Dampfturbinen, was die Möglichkeit schneller Laständerungen gibt. Die intelligente Steuerung der Stromerzeugung mit einer oder mehreren Gas-Turbinen (engl.: Generation Control) berücksichtigt bei der Turbinenauswahl positive und negative Lastreserven.
- Intelligente Steuerung der Energieverteilung durch eine Steuereinrichtung, welche eine Bereitstellung von elektrischer Energie für eine erste Teilanlage zu Lasten mindestens einer anderen der zwei oder mehr Teilanlagen steuert. Bei mehreren Stromverbrauchern mit unterschiedlichen Prioritäten, insbesondere wenn zeit-unkritische Grundlast-Anlagen vorhanden sind, die zugunsten EAF abgeschaltet werden können, gelingt das Abfangen und Ausgleichen von Unterschieden zwischen Angebot und Nachfrage von Momentanleistung innerhalb des Inselnetzes.

Die zwei oder mehr metallurgischen Teilanlagen können zwei oder mehr EAFs, insbesondere N EAFs sein, wobei N eine natürliche Zahl ist. Es ist aber auch möglich, dass die zwei oder mehr metallurgischen Teilanlagen ein oder mehr EAFs und mindestens eine Anlage umfassen, welche den ein oder mehr EAFs im metallurgischen Prozess vor- oder nachgeschaltet ist.

Vorteilhafte Ausgestaltungen und Weiterbildungen der Erfindung sind in den abhängigen Ansprüchen angegeben.

Gemäß einer Weiterbildung der Erfindung umfassen die zwei oder mehr Teilanlagen mindestens ein Stahlwerk mit mindestens einem Elektrolichtbogenofen und mindestens eine Teilanlage für einen dem Stahlwerk vor- oder nachgelagerten metallurgischen Prozess.

Gemäß einer Weiterbildung der Erfindung ist die mindestens eine Teilanlage für einen dem Stahlwerk vor- oder nachgelagerten metallurgischen Prozess eine oder mehrere folgender Anlagen: Erzgewinnungsanlage, Erzaufbereitungsanlage, Pelletanlage, Roheisenerzeugungsanlage, Direktreduktionsanlage, Gießanlage, Formgebungsanlage, Veredelungsanlage, Förderanlage, Hilfsanlage. Die Teilanlagen können der Gewinnung, Förderung und Sicherung dienen. Als Teilanlagen können auch Bagger, Band- und Kettenförderer, Bohrwagen, Kohlehobel und Lade- und Transportfahrzeuge betrachtet werden oder andere Anlagen für Nebenarbeiten, Hilfsanlagen ("auxiliary units") und Nebenanlagen, z.B. Infrastruktur-Nebenanlagen wie Unterkünfte von Arbeitern, Aufenthalts- oder Waschräume.

Gemäß einer Weiterbildung der Erfindung ist die erste Teilanlage ein Stahlwerk mit mindestens einem Elektrolichtbogenofen. Es ist vorteilhaft, dass der mindestens eine EAF genau ein EAF oder zwei EAFs oder mehr als zwei EAFs sind.

Gemäß einer Weiterbildung der Erfindung ist der mindestens eine Elektrolichtbogenofen so ausgebildet, dass ein Chargieren und/oder ein Abstich und/oder ein Elektrodenwechsel schnell und einfach erfolgen können. So kann der EAF beispielsweise einen vorzugsweise exzentrisch angeordneten Bodenabstich aufweisen, wodurch der Abstich deutlich vereinfacht wird. Es ist auch möglich, dass der EAF eine Wasserkühlung von Wand und/oder Deckel und/oder Elektroden aufweist. Durch energiesparende metallurgische Verfahren bzw. Systeme werden der Energiebedarf und/oder die Lastdynamik verringert, was für ein Inselnetz sehr vorteilhaft ist.

Vorzugsweise ist der mindestens eine Elektrolichtbogenofen ein Lichtbogenofen mit mindestens einer Elektrode.

Gemäß einer Weiterbildung der Erfindung ist die Steuereinrichtung über Datenleitungen zum Austausch von Prozessdaten, insbesondere über redundant ausgelegte Busleitungen und/oder optische Datenleitungen, mit mindestens einer der zwei oder mehr Teilanlagen und mit dem mindestens einen Kraftwerk verbunden. Um eine verlässliche, schnelle Datenübertragung sicherstellen zu können, sind die Kabelleitungen vorzugsweise als eine Festverkabelung ausgeführt. Der Datenaustausch zwischen den zwei oder mehr Teilanlagen und dem mindestens einen Kraftwerk kann mittels einer Daten-Ringleitung erfolgen.

Gemäß einer Weiterbildung der Erfindung ist das mindestens eine Kraftwerk ein GuD-Kraftwerk (GuD = Gas- und Dampfturbinen). Vorzugsweise weist das mindestens eine Kraftwerk mindestens einen Gas- und Dampfturbinenblock auf. Durch ein GuD-Kraftwerk bzw. eine geeignete Turbinenauswahl kann die Dynamik moderner Energieerzeugung genutzt werden, insbesondere kurze Startzeiten und Möglichkeit schneller Laständerungen. Die Bildung einer positiven bzw. negativen Lastreserve ist somit möglich.

Gemäß einer Weiterbildung der Erfindung weist die Anlage mindestens eine Speichereinheit zur Zwischenspeicherung elektrischer Energie auf, wobei durch die Steuereinrichtung eine vorübergehende Speicherung von elektrischer Energie in der Speichereinheit steuerbar ist. Es ist möglich, dass die mindestens eine Speichereinheit eine Wasserelektrolyse-Einheit, ein Akkumulator oder eine Pressluftspeichereinheit ist. Durch Energiespeicher können positive bzw. negative Lastreserven gebildet werden.

Gemäß einer Weiterbildung der Erfindung weist das Verfahren weiter folgende Schritte auf: Sammeln von auf Prozessdaten basierenden Informationen, welche von einem Erzeuger der elektrischen Energie in dem Inselnetz und von den zwei oder mehr Teilanlagen gesendet werden; und Steuern der Bereitstellung von elektrischer Energie innerhalb des Inselnetzes auf Basis dieser Informationen. Dadurch kann eine intelligente Steuerung mit Lastmanagement (engl.: Load Management) erreicht werden. In einer intelligenten Steuerung kann z.B. auch eine "Initiation and Supervision of Synchronisation" erfolgen.

EP 2 015 011 A1 beschreibt einen Lastregel-Algorithmus für eine Gasverflüssigungsanlage aus Basis einer intelligenten Steuerung mit Lastmanagement. Dieser Algorithmus kann analog auf die vorliegende Erfindung übertragen werden, zur Steuerung elektrischer Energie in der metallurgischen Anlage.

Gemäß einer Weiterbildung der Erfindung weist das Verfahren weiter folgende Schritte auf: Bereitstellen von elektrischer Energie durch mindestens ein Kraftwerk mit zwei oder mehr Turbinen; Berechnen der erforderlichen Anzahl und der Auslastung der Turbinen, so dass die für einen Betrieb der zwei oder mehr Teilanlagen erforderliche Energie unter Berücksichtigung einer Lastreserve bereitgestellt wird.

Gemäß einer Weiterbildung der Erfindung ist eine der Teilanlagen ein Stahlwerk mit mindestens einem Elektrolichtbogenofen, wobei das Steuern der Bereitstellung von Energie umfasst: Bereitstellen von elektrischer Energie für den mindestens einen Elektrolichtbogenofen zu Lasten mindestens einer anderen der zwei oder mehr Teilanlagen.

Gemäß einer Weiterbildung der Erfindung weist das Verfahren folgenden Schritt auf: Unterbrechen der elektrischen Versorgung zu mindestens einer der anderen Teilanlagen oder Versorgen zumindest einer der anderen Teilanlagen mit einer begrenzten Menge an elektrischer Energie während des Betriebs des mindestens eines Elektrolichtbogenofens.

Gemäß einer Weiterbildung der Erfindung weist das Verfahren weiter folgenden Schritt auf, falls das Stahlwerk zwei oder mehr Elektrolichtbogenöfen umfasst: Betreiben der Elektrolichtbogenöfen in voneinander getrennten Zeiträumen.

Gemäß einer Weiterbildung der Erfindung weist das Verfahren weiter folgenden Schritt auf: Beschicken, vorzugsweise kontinuierliches Beschicken, des mindestens einen Elektrolichtbogenofens mit heißem direkt-reduziertem Eisen (= HDRI), welches von einer Direkt-Reduktionsanlage der metallurgischen Anlage bereitgestellt wird. Dadurch entfällt das energieaufwändige Wiederaufwärmen des Eisens und einige Prozessschritte, wodurch der Energiebedarf sinkt. Durch energiesparende metallurgische Verfahren, wie Verwendung von HDRI und/oder kontinuierliches Beschicken bzw. Betreiben der EAFs, werden der Energiebedarf und/oder die Lastdynamik verringert, was für ein Inselnetz sehr vorteilhaft ist.

Im Folgenden wird die Erfindung anhand von Ausführungsbeispielen unter Zuhilfenahme der beiliegenden Zeichnungen erläutert. Es zeigen:
- Fig.1: eine schematische Darstellung einer metallurgischen Anlage;
- Fig. 2: ein Schema einer Automatisierung einer metallurgischen Anlage;
- Fig. 3: ein Energienetzwerküberwachungs- und Steuerungssystem (= ENMC) einer metallurgischen Anlage; und
- Fig. 4: einen Lastrechner-Algorithmus der Steuereinrichtung für die Abschaltung vorgewählter Turbinen.

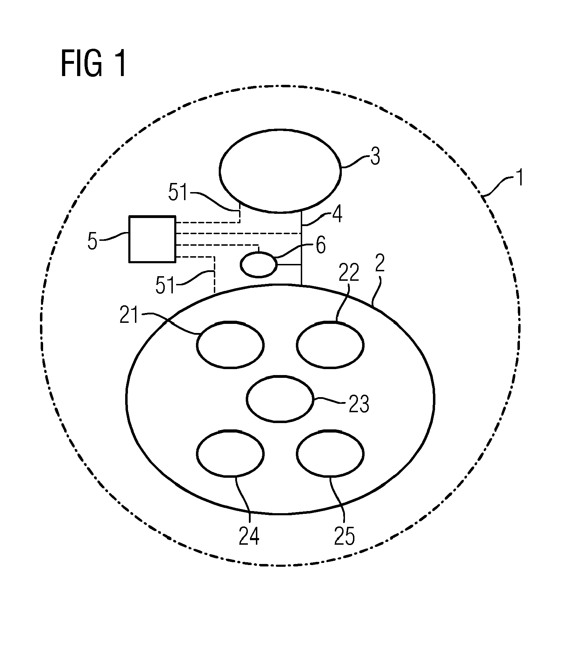

Fig. 1 zeigt schematisch eine metallurgische Anlage 1. Die Anlage 1 umfasst als Stromverbraucher 2 fünf metallurgische Teilanlagen 21 bis 25, nämlich eine Erzgewinnungsanlage 21, eine Roheisenerzeugungsanlage 22, ein Elektrostahlwerk 23 mit einem EAF, eine Förderanlage 24 und infrastrukturelle Nebenanlagen 25. Die Erzgewinnungsanlage 21 umfasst ein Bergwerk, eine Erzaufbereitungsanlage und Hilfsanlagen. Die Roheisenerzeugungsanlage 22 umfasst eine Pelletanlage, eine HDRI-Anlage und Hilfsanlagen. Das Elektrostahlwerk 23 umfasst eine Schmelzanlage, eine Gießanlage, ein Walzwerk und Hilfsanlagen, z.B. für die Versorgung mit Sauerstoff und Wasser. Die Förderanlage 24 umfasst drei Fördersysteme. Die infrastrukturellen Nebenanlagen 25 umfassen Unterkünfte, eine Wäscherei, eine Kantine und eine Trinkwasserversorgung.

Die metallurgische Anlage 1 umfasst außerdem ein Kraftwerk 3 mit einer Gas-Turbine zur Erzeugung elektrischer Energie in dem Stromnetz 4, sowie ein Stromnetz 4 zur Verteilung von elektrischer Energie. Das Stromnetz 4 verbindet das Kraftwerk 3 mit den Stromverbrauchern 2.

Das Stromnetz 4 mit den daran angeschlossenen Stromverbrauchern 2 und dem Kraftwerk 3 bildet ein Inselnetz, d.h. ein Stromnetz, in dem die metallurgischen Teilanlagen 21, 22, 23 die für ihren Betrieb benötigte elektrische Energie zu 100% von dem Kraftwerk 3 beziehen.

Weiterhin umfasst die metallurgische Anlage 1 eine Steuereinrichtung 5, die über Steuerleitungen 51 das Kraftwerk 3, das Stromverteilungsnetz 4 und die Stromverbraucher 2 ansteuern kann.

Die metallurgische Anlage 1 umfasst außerdem eine Speichereinheit 6 zur Zwischenspeicherung elektrischer Energie. Durch die Steuereinrichtung 5 ist mittels einer Steuerleitung 51 eine vorübergehende Speicherung von elektrischer Energie in der Speichereinheit 6 steuerbar.

Durch die Integration der metallurgischen Teilanlagen 21, 22 und 23, welche unabhängig voneinander betreibbar sind, in die metallurgische Anlage, die moderne Energieerzeugung durch eine Gas-Turbine und die intelligente Steuerung der Energieverteilung durch die Steuereinrichtung 5, welche eine Bereitstellung von elektrischer Energie für das Stahlwerk 23 zu Lasten der Erzgewinnungsanlage 21, der Roheisenerzeugungsanlage 22, der Förderanlage 24 und der infrastrukturellen Nebenanlagen 25 ist es möglich, das Elektrostahlwerk 23 in einem Inselbetrieb mit elektrischer Energie zu versorgen.

Beim Anschalten des EAF werden untergeordnete Stromverbraucher entweder völlig abgeschaltet oder in einen Betriebszustand mit geringerem Energieverbrauch umgeschaltet. Beim Abschalten des EAF werden diese untergeordnete Stromverbraucher wieder in dem Betriebszustand betrieben, in dem sie vor dem Einschalten des EAF waren, oder sogar in einen Betriebszustand mit höherem Energieverbrauch umgeschaltet.

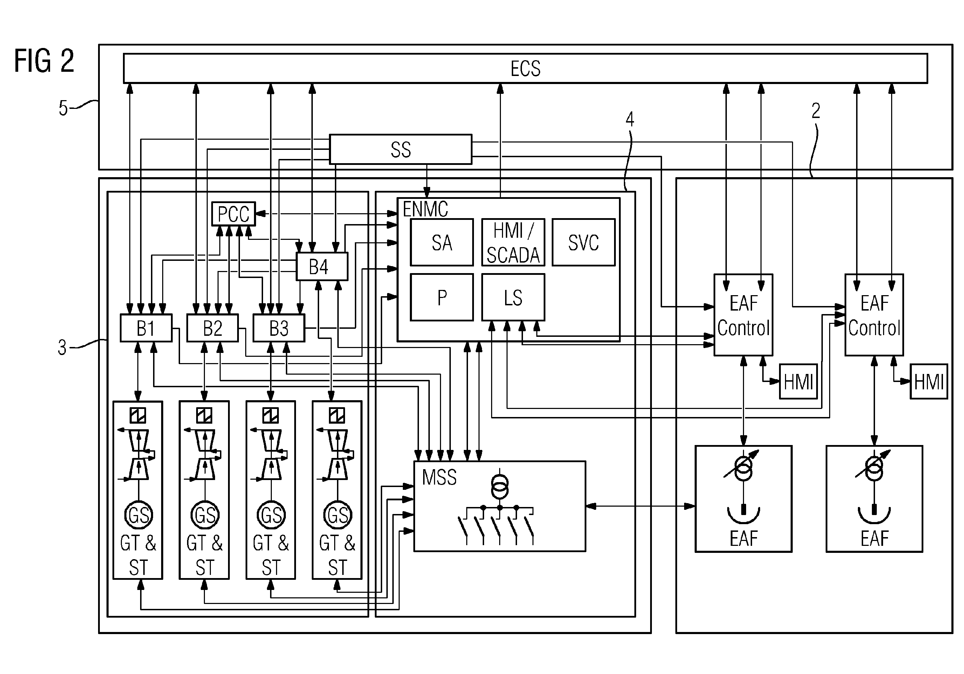

Fig. 2 zeigt eine typische Automatisierung einer metallurgischen Anlage mit vier Kraftwerksblöcken.

Die als Automatisierungsinseln ausgebildeten Gruppen von Erzeugern 3, Verteilern 4 und Verbrauchern 2 sind über schnelle Datenverbindungen miteinander vernetzt. Die Steuereinrichtung 5, z.B. in Form eines Lastrechners, erhält von der Erzeugerseite 3 und der Verbraucherseite 2 kontinuierlich aus den Prozessdaten errechnete Informationen, um beim ungeplanten Ausfall eines Generators und/oder Ausfall/Abschaltung eines oder mehrere Großverbraucher, z.B. eines oder mehrerer EAFs, so schnell gegensteuern zu können, dass weder die Stabilitätsgrenzen des elektrischen Netzes 4, insbesondere hinsichtlich Frequenz und Spannung, überschritten werden, noch die elektrischen EAFs in instabile Lastzustände geraten. Hierzu werden in der Steuereinrichtung 5 entsprechende Entscheidungsalgorithmen hinterlegt.

Der Stromerzeuger 3 weist mehrere Blöcke B1 bis B4 auf, umfassend je eine GuD-Anlage GT&ST (= Gas Turbine and Steam Turbine). Als GuD-Anlage bzw. GuD-Block wird eine Anlageneinheit für einen gemeinsamen Einsatz mindestens einer Gasturbine und mindestens einer Dampfturbine bezeichnet, bei dem die Abwärme von in der Regel zwei Gasturbinen in einem Waste Heat Recovery Boiler ausgenutzt wird, um Dampf für eine Dampfturbine zu erzeugen. Einzelaggregatregelungen und -steuerungen (Generator- und Turbinenregler und -Steuerung; engl.: "TCS" = Turbine Control System) sind durch bidirektionale Signalaustausch-Leitungen miteinander und mit einer übergeordneten Kraftwerkssteuerung PPC (= Power Plant Control) verbunden.

Jeder der Blöcke B1 bis B4 steht in bidirektionalem Signalaustausch mit der Kraftwerkssteuerung PPC, welche ihrerseits mit einem Energienetzwerküberwachungs- und Steuerungssystem ENMC (= Energy Network Monitoring and Control System) des Stromverteilernetzes 4 in bidirektionalem Signalaustausch steht.

In dem vorliegenden Beispiel sind vier Kraftwerksblöcke B1 bis B4 dargestellt; es versteht sich aber von selbst, dass der Stromerzeuger 3 eine beliebige Anzahl N von Kraftwerksblöcken umfassen kann, wobei N eine natürliche Zahl ist.

Das Energienetzwerküberwachungs- und Steuerungssystem ENMC umfasst eine Hochspannungs-Unterstationsautomatisierung SA (= Substation Automation), eine Schutzeinheit P (= Protection), eine Mensch-Maschine-Schnittstelle/Überwachungs-Steuer- und Datenbeschaffung HMI (= Human Machine Interface)/SCADA (= Supervisory Control and Data Acquisition), eine Lastabwurfeinheit LS (= Load Shedding) sowie eine Blindstromkompensation SVC (= Static VAr Compensation; VAr = Volt-Ampere reaktiv).

Jeder der Blöcke B1 bis B4 steht ebenfalls in bidirektionalem Signalaustausch mit einer Hauptlastverteilstation MSS (= Main Sub-Station), welche Schalter und Transformatoren aufweist. Die Hauptlastverteilstation MSS steht parallel dazu in bidirektionalem Signalaustausch mit dem Energienetzwerküberwachungs- und Steuerungssystem ENMC. Jede der Turbinen GT&ST eines GuD-Blocks steht ebenfalls in bidirektionalem Signalaustausch mit der Hauptlastverteilstation MSS.

Die Stromverbraucher 2 umfassen zwei Lichtbogenöfen EAF, denen jeweils eine eigene EAF-Steuerungseinheit EAF Control zugeordnet ist. Zwischen den Lichtbogenöfen EAF und den EAF-Steuerungseinheiten EAF Control findet ein bidirektionaler Signalaustausch statt. Den EAF-Steuerungseinheiten EAF Control ist jeweils eine Mensch-Maschine-Schnittstelle HMI zugeordnet, wobei zwischen den EAF-Steuerungseinheiten EAF Control und den Mensch-Maschine-Schnittstelle HMI ein bidirektionaler Signalaustausch stattfindet. Die EAF-Steuerungseinheiten EAF Control und das Energienetzwerküberwachungs-und Steuerungssystem ENMC stehen in bidirektionalem Signalaustausch.

Die Steuereinrichtung 5 umfasst ein Elektrizitätssteuersystem ECS (= Electrical Control System) und weitere Lastunterverteilstationen SS (= Sub-Stations) der metallurgischen Anlage. Von den Lastunterverteilstationen SS gehen unidirektionale Signalleitungen zu den Blöcken B1 bis B4, dem Energienetzwerküberwachungs- und Steuerungssystem ENMC und den EAF-Steuerungseinheiten EAF Control. Das Elektrizitätssteuersystem ECS steht mit den Blöcken B1 bis B4 und den EAF-Steuerungseinheiten EAF Control in bidirektionalem Signalaustausch. Von dem Energienetzwerküberwachungs- und Steuerungssystem ENMC geht eine unidirektionale Signalleitung zu dem Elektrizitätssteuersystem ECS.

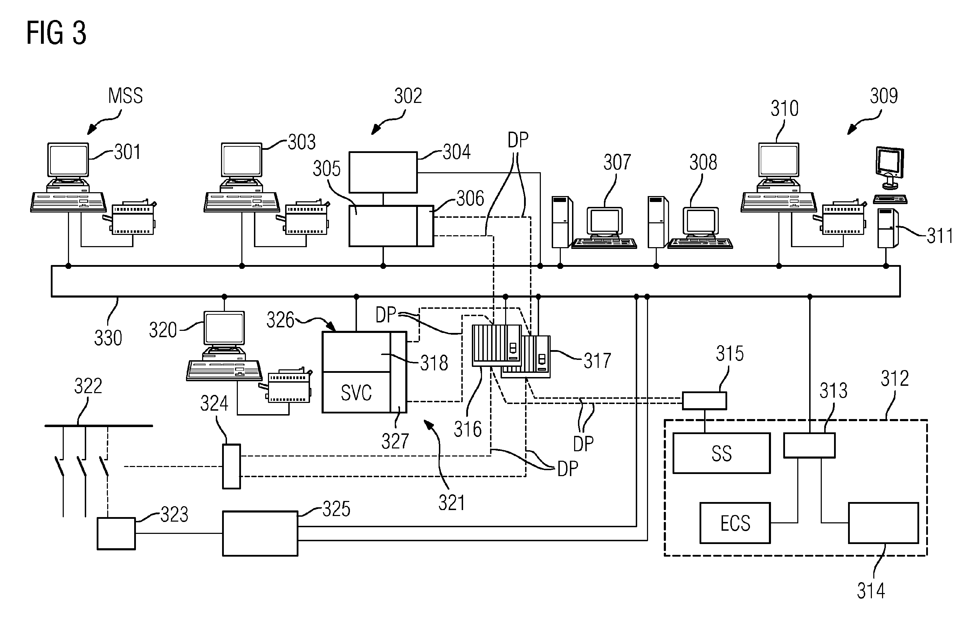

Fig. 3 zeigt ein Energienetzwerküberwachungs- und Steuerungssystem (= ENMC-System) einer metallurgischen Anlage gemäß einem weiteren Ausführungsbeispiel. Eine Daten-Ringleitung 330, z.B. eine Ethernet-Ringleitung, verbindet verschiedene Einheiten der metallurgischen Anlage.

Eine Hauptlastverteilstation MSS umfasst eine Leitstation 301 und einen Hauptlastverteilstations-Controller 325, die jeweils an die Daten-Ringleitung 330 angeschlossen sind. An den Hauptlastverteilstations-Controller 325 ist über eine weitere Daten-Leitung ein Feldgerät (engl.: Field Device) angeschlossen, das eine Haupt-Sammelschiene 322 (engl.: Main Bus-Bar) steuert.

Ein Kraftwerksmesstechnikraum 302 umfasst eine Leitstation 303, eine übergeordnete Kraftwerkssteuerung 304 (= PPC), Kraftwerkseinheiten-Steuerungen 305 (= TCS), und SCADA/HMI Server 307 und 308, die jeweils an die Daten-Ringleitung 330 angeschlossen sind. Die Kraftwerkssteuerung 304 und die Kraftwerkseinheiten-Steuerungen 305 sind nicht in den Umfang der Leistung des ENMC-Systems eingeschlossen.

Ein zentraler Steuerraum 309 umfasst eine Leitstation 310 und eine Engineering-Station 311, die jeweils an die Daten-Ringleitung 330 angeschlossen sind.

Eine weitere Einheit 312, die nicht in den Umfang der Leistung des ENMC-Systems eingeschlossen ist, umfasst ein Gateway/Converter 313, das an die Daten-Ringleitung 330 angeschlossen ist. Mit dem Gateway/Converter 313 sind ein Elektrizitätssteuersystem ECS der metallurgischen Anlage und ein Werksinformationssystem 314 verbunden.

Das ENMC-System umfasst außerdem zwei Load Shedding Controller 316 und 317, die an die Daten-Ringleitung 330 angeschlossen sind. Die Load Shedding Controller 316 und 317 umfassen z.B. SIMATIC^{®} S7-400 PLCs.

Das Stahlwerk umfasst eine Leitstation 320 und eine Stahlwerkssteuerungs-Einheit 326 bestehend aus EAF-Controllern 318 und einer Blindstromkompensation SVC, wobei die Leitstation 320 und die Stahlwerkssteuerungs-Einheit 326 jeweils an die Daten-Ringleitung 330 angeschlossen sind.

Die Load Shedding Controller 316 und 317 sind über redundante serielle Busleitungen DP und je eine Remote I/O Busstation 306, 315, 324, 327 mit den Kraftwerkseinheiten-Steuerungen 305, der weiteren Einheit 312, der Haupt-Sammelschiene 322 und der Stahlwerkssteuerungs-Einheit 326 verbunden. Als Remote I/O Busstation 306, 315, 324, 327 können z.B. SIMATIC^{®} ET 200M verwendet werden, als serielle Busleitungen DP kann z.B. PROFIBUS DP mit einer Glasfaserleitung verwendet werden.

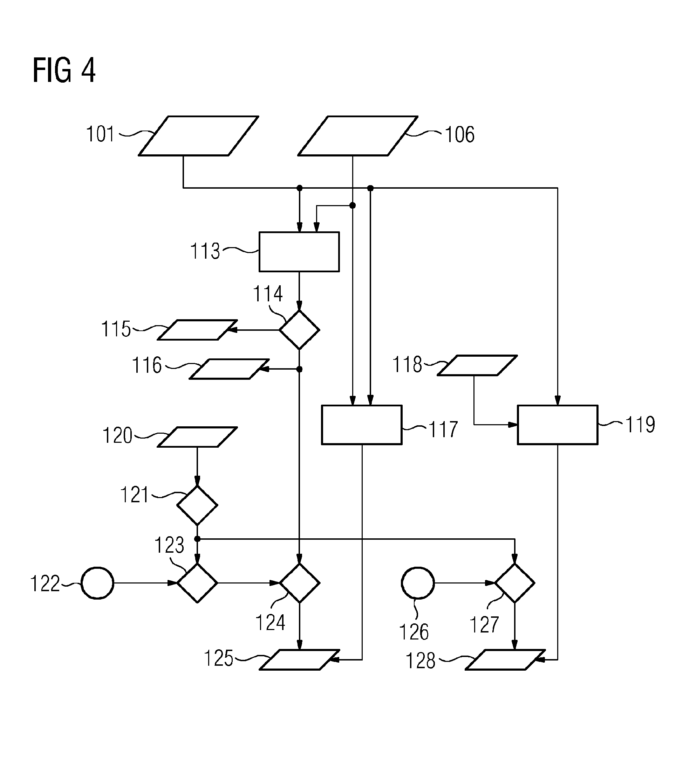

Fig. 4 zeigt einen Entscheidungsalgorithmus, der auf eine ungeplante Abschaltung großer Stromverbraucher wie Lichtbogenöfen anwendbar ist. Dieser Algorithmus ist in der Steuereinrichtung 5 hinterlegt. Die Kraftwerks- und Maschinenleittechnik ist so ausgelegt, dass sie Lastabwürfe dieser Größenordnung ohne Mitwirkung eines dynamischen Lastrechners ausregeln kann.

Zur Beurteilung der Lastverhältnisse erhält der dynamische Lastrechner laufend Informationen 101 aus der Kraftwerksleittechnik, für alle GuD-Anlagen GT&ST, z.B. die aktuelle Leistung, die positive Reserve, die negative Reserve und die Verfügbarkeit einer Turbine. Außerdem erhält der dynamische Lastrechner laufend Informationen 106 aus dem Stahlwerk, für alle Lichtbogenöfen, z.B. die aktuelle Last und die Reserve.

Ist die Summe der durch Frequenzregelung erreichbaren negativen Lastreserve größer als der größte anzunehmende Lastabwurf (engl.: load shedding) durch Abschaltung von Lichtbogenöfen, greift der dynamische Lastrechner nicht ein. Andernfalls wird ein vorgewählter Turbosatz (= GuD-Anlage) abgeregelt oder herunter gefahren, und die resultierende positive Lastreserve gleicht die verbleibende Lücke aus.

Das Bezugszeichen 113 bezeichnet hierbei die Berechnung der negativen Lastreserve und die Bestimmung der Lichtbogenöfen mit der größten Last. Im Schritt 114 werden diese beiden Werte verglichen. Ist die negative Lastreserve größer als die größere Last der Lichtbogenöfen, meldet der Rechner "n+1 verfügbar" 115. Im anderen Fall meldet er "n+1 nicht verfügbar" 116.

Anhand der Daten aus der Kraftwerksleittechnik 101 sowie der Daten der Lichtbogenöfen 106 erfolgt eine Zuordnung 117 von Turbosätzen und Lichtbogenöfen. Mithilfe dieser Zuordnung werden vorgewählte Turbinen abgeregelt oder herunter gefahren, wenn die negative Lastreserve kleiner ist 116 als der Energiebedarf der größten Lichtbogenöfen und 124 entweder ein Lichtbogenofen ausfällt 122 oder 123 die Frequenzänderungsgeschwindigkeit 120 im Energieversorgungsnetz der metallurgischen Anlage eine vorgegebene Grenze überschreitet 121.

Bei noch größeren Lastabwürfen 126, z.B. im Falle von partiellen Notabschaltungen aus dem Prozess, müssen ggf. mehrere geeignete Turbosätze im Schnellschluss, d.h. einer schnellstmögliche Wegnahme der treibenden Energie zur Turbinennotabschaltung, vom Netz genommen werden 128. Sind der Ablauf und die Größe 118 einer solchen Notabschaltung bekannt, kann auch ein solcher Vorgang vom Lastrechner prinzipiell gesteuert werden, z.B. indem eine Vorauswahl 119 abzuschaltender Turbinen getroffen wird, um ggf. einen Teilprozess weiter betreiben zu können. Große Lastabwürfe 126 und das Überschreiten 121 einer Grenze der Frequenzänderungsgeschwindigkeit 120 sind im Sinne einer nicht-ausschließenden Disjunktion 127 miteinander verknüpft.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Metallurgische Anlage (1) zum Betreiben im Inselbetrieb, umfassend
- zwei oder mehr metallurgische Teilanlagen (21 bis 25),
- ein Inselnetz (4) zur Verteilung von elektrischer Energie,
- mindestens ein Kraftwerk (3) mit mindestens einer Gas-Turbine zur Erzeugung elektrischer Energie in dem Inselnetz (4), und
- eine Steuereinrichtung (5),
wobei die Teilanlagen (21 bis 25) die für ihren Betrieb benötigte elektrische Energie zu mindestens 80%, insbesondere zu mindestens 90%, über das Inselnetz (4) von dem mindestens einen Kraftwerk (3) beziehen, und
wobei mittels der Steuereinrichtung (5) eine Bereitstellung von elektrischer Energie für eine erste Teilanlage (21 bis 25) zu Lasten mindestens einer anderen der zwei oder mehr Teilanlagen (21 bis 25) steuerbar ist.

2. Metallurgische Anlage (1) nach Anspruch 1, wobei die zwei oder mehr Teilanlagen (21 bis 25) mindestens ein Stahlwerk (23) mit mindestens einem Elektrolichtbogenofen (EAF) und mindestens eine Teilanlage (21, 22, 24, 25) für einen dem Stahlwerk (23) vor- oder nachgelagerten metallurgischen Prozess umfassen.

3. Metallurgische Anlage (1) nach Anspruch 2, wobei die mindestens eine Teilanlage (21, 22, 24, 25) für einen dem Stahlwerk (23) vor- oder nachgelagerten metallurgischen Prozess eine oder mehrere folgender Anlagen ist: Erzgewinnungsanlage (21), Erzaufbereitungsanlage, Pelletanlage, Roheisenerzeugungsanlage (22), Direktreduktionsanlage, Gießanlage, Formgebungsanlage, Veredelungsanlage, Förderanlage (24), Hilfsanlage (25).

4. Metallurgische Anlage (1) nach einem der vorhergehenden Ansprüche, wobei die erste Teilanlage ein Stahlwerk (23) mit mindestens einem Elektrolichtbogenofen (EAF) ist.

5. Metallurgische Anlage (1) nach einem der Ansprüche 2 bis 4, wobei der mindestens eine Elektrolichtbogenofen (EAF) so ausgebildet ist, dass ein Chargieren und/oder ein Abstich und/oder ein Elektrodenwechsel schnell und einfach erfolgen kann bzw. können.

6. Metallurgische Anlage (1) nach einem der vorhergehenden Ansprüche, wobei die Steuereinrichtung (5) über Datenleitungen (51) zum Austausch von Prozessdaten, insbesondere über redundant ausgelegte Busleitungen und/oder optische Datenleitungen, mit mindestens einer der zwei oder mehr Teilanlagen (21 bis 25) und mit dem mindestens einen Kraftwerk (3) verbunden ist.

7. Metallurgische Anlage (1) nach einem der vorhergehenden Ansprüche, wobei das mindestens eine Kraftwerk (3) mindestens einen Gas- und Dampfturbinenblock (B1 bis B4) aufweist.

8. Metallurgische Anlage (1) nach einem der vorhergehenden Ansprüche, **gekennzeichnet durch** mindestens eine Speichereinheit (6) zur Zwischenspeicherung elektrischer Energie, wobei **durch** die Steuereinrichtung (5) eine vorübergehende Speicherung von elektrischer Energie in der Speichereinheit (6) steuerbar ist.

9. Metallurgische Anlage (1) nach Anspruch 8, wobei die mindestens eine Speichereinheit (6) eine Wasserelektrolyse-Einheit ist.

10. Verfahren zur Versorgung einer zwei oder mehr metallurgische Teilanlagen (21 bis 25) umfassenden metallurgischen Anlage (1) mit elektrischer Energie im Inselbetrieb über ein Inselnetz (4), wobei das Verfahren folgende Schritte aufweist:
Bereitstellen von elektrischer Energie in dem Inselnetz (4);
Liefern der für den Betrieb der Teilanlagen (21 bis 25) benötigten elektrischen Energie zu mindestens 80%, insbesondere zu mindestens 90%, aus dem Inselnetz (4); und
Steuern einer Bereitstellung von elektrischer Energie für eine erste Teilanlage (21 bis 25) zu Lasten mindestens einer anderen der zwei oder mehr Teilanlagen (21 bis 25).

11. Verfahren nach Anspruch 10, wobei das Verfahren weiter folgende Schritte aufweist:
Sammeln von auf Prozessdaten basierenden Informationen, welche von einem Erzeuger der elektrischen Energie in dem Inselnetz (4) und von den zwei oder mehr Teilanlagen (21 bis 25) gesendet werden; und
Steuern der Bereitstellung von elektrischer Energie innerhalb des Inselnetzes (4) auf Basis dieser Informationen.

12. Verfahren nach Anspruch 10 oder 11, wobei das Verfahren weiter folgende Schritte aufweist:
Bereitstellen von elektrischer Energie durch mindestens ein Kraftwerk (3) mit zwei oder mehr Turbinen (GT&ST);
Berechnen der erforderlichen Anzahl und der Auslastung der Turbinen (GT&ST), so dass die für einen Betrieb der zwei oder
mehr Teilanlagen (21 bis 25) erforderliche Energie unter Berücksichtigung einer Lastreserve bereitgestellt wird.

13. Verfahren nach einem der Ansprüche 10 bis 12, wobei eine der Teilanlagen ein Stahlwerk (23) mit mindestens einem Elektrolichtbogenofen (EAF) ist, wobei das Steuern der Bereitstellung von Energie umfasst:
Bereitstellen von elektrischer Energie für den mindestens einen Elektrolichtbogenofen (EAF) zu Lasten mindestens einer anderen der zwei oder mehr Teilanlagen (21, 22, 24, 25).

14. Verfahren nach Anspruch 13, **gekennzeichnet durch** folgenden Schritt: Unterbrechen der elektrischen Versorgung zu mindestens einer der anderen Teilanlagen (21, 22, 24, 25) oder Versorgen zumindest einer der anderen Teilanlagen (21, 22, 24, 25) mit einer begrenzten Menge an elektrischer Energie während des Betriebs des mindestens eines Elektrolichtbogenofens (EAF).

15. Verfahren nach Anspruch 13 oder 14, wobei das Verfahren weiter folgenden Schritt aufweist, falls das Stahlwerk (23) zwei oder mehr Elektrolichtbogenöfen (EAF) umfasst:
Betreiben der zwei oder mehr Elektrolichtbogenöfen (EAF) in voneinander getrennten Zeiträumen.

16. Verfahren nach einem der Ansprüche 13 bis 15, wobei das Verfahren weiter folgenden Schritt aufweist:
Beschicken, vorzugsweise kontinuierliches Beschicken, des mindestens einen Elektrolichtbogenofens (EAF) mit HDRI, welches von einer Direkt-Reduktionsanlage der metallurgischen Anlage (1) bereitgestellt wird.
